# EUROPEAN PATENT APPLICATION

(11) **EP 1 770 310 A2**
(43) Date of publication of application: **04.04.2007**
(21) Application number: 06121008.4
(22) Date of filing: 21.09.2006
(51) Int. Cl.: F16H 59/02

(54) **Speed changing operation apparatus for vehicle**

(30) Priority: 28.09.2005 JP 2005281173
(71) Applicant: KABUSHIKI KAISHA ATSUMITEC, Hamamatsu-shi, Shizuoka-ken (JP)
(72) Inventor: Ohno, Tetsuji, Shizuoka-ken (JP); Shinmura, Masayuki, Shizuoka-ken (JP)
(74) Representative: Cohausz & Florack

(57) **Abstract**

Speed changing apparatus for vehicle which can stably assemble the operating knob to the operating lever shaft and also can elastically support the operating knob at any position of the operating lever shaft. According to the present invention, there is provided a speed changing operation apparatus for vehicle comprising an operating lever shaft (4) pivotally supported on a speed changing operation unit (1) and an operating knob (3) formed with a mounting bore (3aa) for receiving a top end of the operating lever shaft (4) and adapted to be mounted on the top end of the operating lever shaft for carrying out a speed changing operation of a transmission of vehicle by pivoting the operating lever shaft (4), further comprising an engagement member (5) having a cylindrical configuration of substantially same inner circumferential configuration as an outer circumferential configuration of the operating lever shaft, the engagement member (5) being adapted to be received and secured within the mounting bore (3aa) of the operating knob (3) and having nails (5a) being able to be elastically deformed by the operating lever shaft (4) and engaged therewith when the operating lever shaft (4) is inserted through the engagement member (5).

## Description

### BACKGROUND OF THE INVENTION

### Field of the Invention

The present invention relates to a speed changing operation apparatus for vehicle for carrying out the speed changing operation of a transmission.

### Description of Background Art

The speed changing operation apparatus for vehicle generally comprises an operating lever shaft and an operating knob mounted on the top end of the operating lever shaft and acts to carry out the speed changing operation of the transmission of vehicle by pivotally operating the lever shaft with gripping the operating knob.

For example, as disclosed in patent document 1 (Japanese Patent Domestic Publication No. 513000/2004), an operating knob is formed with a mounting bore (pocket 34) extending upwardly from its bottom surface into which a top end of an operating lever shaft (shaft 14) is adapted to be inserted. The operating knob is prevented from being slipped out from the shaft and from being rotated relative to the shaft by elastic force of a fastener (18) secured in the mounting bore.

The fastener (18) comprises a top (18) being abutted against a projected end of the operating lever shaft, a pair of legs (22, 24) extending downward from the top (18), and an elastic flange (28) formed on one of the legs (24). The top end of the operating lever shaft abuts against the top (18) and the elastic flange (28) engages a notch (40) on the top end of the operating lever shaft when the lever shaft is inserted into the mounting bore of the operating knob. Accordingly it is possible to assemble the operating knob and lever shaft only by inserting the top end of the lever shaft into the mounting bore of the knob and thus it is possible to reduce the assembling steps as compared with an assembling method for example using screws.

### Disclosure of the Invention

### Problems to be solved by the Invention

According to the speed changing operation apparatus of the prior art, since the elastic flange is formed on one of the pair of legs and the elastic flange is engaged with the notch with the top end being abutted against the end of the lever shaft, there is caused a problem that rattle between the knob and the lever shaft would be often caused. That is, according to the prior art, since only the elastic flange of one of the legs and the other leg are abutted against the circumference of the lever shaft, the rattle tends to be caused because of no support by the fastener in directions other than the abutted direction.

In addition there is another problem that the length of the legs should be extremely extended when the position of elastic support is set at the base of the lever shaft (e.g. when the notch is set at the base side of the lever shaft), since the top forming the fastener should be abutted against the end of the lever shaft according to the prior art.

### SUMMARY OF THE INVENTION

It is, therefore, an object of the present invention to provide a speed changing operation apparatus for vehicle which can stably assemble the operating knob to the operating lever shaft and also can elastically support the operating knob at any position of the operating lever shaft.

According to the present invention of claim 1, there is provided a speed changing operation apparatus for vehicle comprising an operating lever shaft pivotally supported on a speed changing operation unit and an operating knob formed with a mounting bore for receiving a top end of the operating lever shaft and adapted to be mounted on the top end of the operating lever shaft for carrying out a speed changing operation of a transmission of vehicle by pivoting the operating lever shaft characterized in further comprising an engagement member having a cylindrical configuration of substantially same inner circumferential configuration as an outer circumferential configuration of the operating lever shaft, the engagement member being adapted to be received and secured within the mounting bore of the operating knob and having nails being able to be elastically deformed by the operating lever shaft and engaged therewith when the operating lever shaft is inserted through the engagement member.

According to the present invention of claim 2, there is provided a speed changing operation apparatus for vehicle of claim 1 wherein said operating lever shaft is formed with engagement recesses on its outer circumferential surface with which the nails of the engagement member can engage.

According to the present invention of claim 3, there is provided a speed changing operation apparatus for vehicle of claim 1 or 2 wherein at least one pair of the nails are formed on the engagement member so that they are arranged opposite with each other across the diameter of the operating lever shaft.

### Effects of the Invention

According to the present invention of claim 1, since it further comprises an engagement member having a cylindrical configuration of substantially same inner circumferential configuration as an outer circumferential configuration of the operating lever shaft, and since the engagement member is adapted to be received and secured within the mounting bore of the operating knob and has nails being able to be elastically deformed by the operating lever shaft and engaged therewith when the operating lever shaft is inserted through the engagement member, it is possible to stably assemble the operating knob to the operating lever shaft and also to elastically support the operating knob at any position of the operating lever shaft.

According to of the present invention of claim 2, since the operating lever shaft is formed with engagement recesses on its outer circumferential surface with which the nails of the engagement member can engage, it is possible to elastically support the operating knob relative to the operating lever shaft more firmly and rigidly than that of the prior art.

According to the present invention of claim 3, since at least one pair of the nails are formed on the engagement member so that they are arranged opposite with each other across the diameter of the operating lever shaft, it is possible to further stably assemble the operating knob to the operating lever shaft.

### BRIEF DESCRIPTION OF THE DRAWINGS

Additional advantages and features of the present invention will become apparent from the subsequent description and the appended claims, taken in conjunction with the accompanying drawings, wherein:
- Fig. 1: is a perspective view of a speed changing operation apparatus for vehicle according to a preferable embodiment of the present invention;
- Fig. 2: is a perspective view of an operating lever shaft of the speed changing operation apparatus for vehicle of Fig. 1;
- Fig. 3: (a) is a side elevation view of an operating knob of the speed changing operation apparatus for vehicle of Fig. 1, and Fig. 3 (b) is a front elevation view of the same;
- Fig. 4: is a longitudinal section view showing an internal structure of the operating knob in the speed changing operation apparatus for vehicle of Fig. 1;
- Fig. 5: (a) is a side elevation view of a core member of the operating knob of the speed changing operation apparatus for vehicle of Fig. 1, and Fig. 5 (b) is a front elevation view of the same;
- Fig. 6: is a perspective view of an engagement member of the speed changing operation apparatus for vehicle of Fig. 1;
- Fig. 7: is a side elevation view of the engagement member of the speed changing operation apparatus for vehicle of Fig. 1;
- Fig. 8: is an explanatory view showing the assembly of the engagement member to the operating knob of the speed changing operation apparatus for vehicle of Fig. 1;
- Fig. 9: is a schematic view showing a process of engagement of the operating lever shaft relative to the engagement member (condition before engagement) ; and
- Fig. 10: is a schematic view showing a next process of engagement of the operating lever shaft relative to the engagement member (condition after engagement).

### DESCRIPTION OF THE PREFERRED EMBODIMENTS

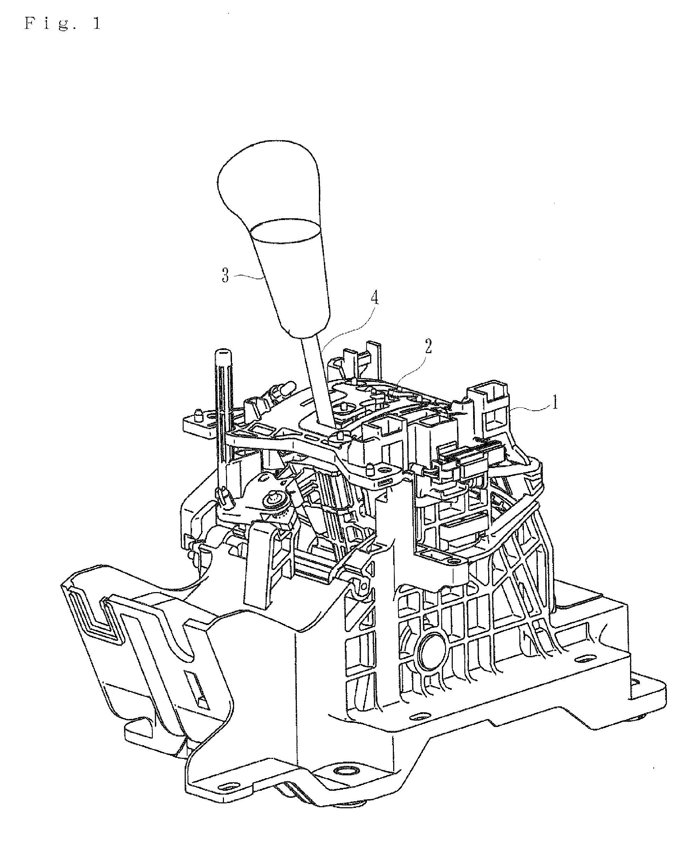

A preferred embodiment of the present invention will be described with reference to the accompanying drawings.
As shown in Fig. 1, a speed changing operation apparatus for vehicle of the preferred embodiment of the present invention generally comprises a speed changing operation unit 1 mounted on a body of vehicle, an operating lever shaft 4 pivotally movable along a gate groove 2 formed on the top of the speed changing operation unit 1, and an operating knob 3 mounted on the top end of the operating lever shaft 4.

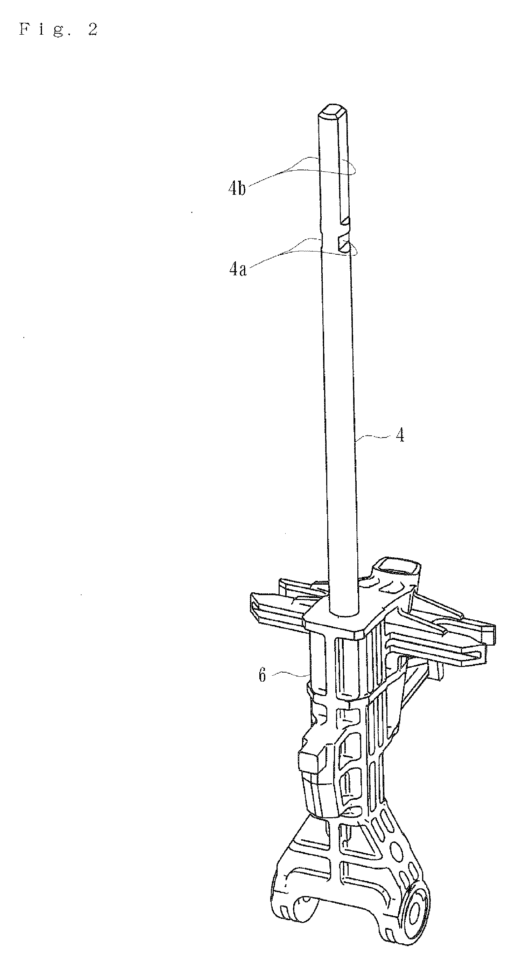

The speed changing operation unit 1 is formed of plastic molded parts and supported so that its base end 6 (Fig. 2) formed on the base end of the operating lever shaft 4 can pivot fore and aft as well as right and left. Accordingly the operating lever shaft 4 can also pivot fore and aft as well as right and left along the gate groove 2. It is possible to use the operating lever shaft 4 which can pivot only in the fore and aft direction.

As previously described, the operating lever shaft 4 can be pivoted around its end member 5 and is provided on its top end 6 with a operating knob 3 gripped by a driver of vehicle. As clearly shown in Fig. 2, the operating lever shaft 4 is formed with chamfered portions 4b over a predetermined region from its top end and is further formed with engagement recesses 4a below the chamfered portions 4b.

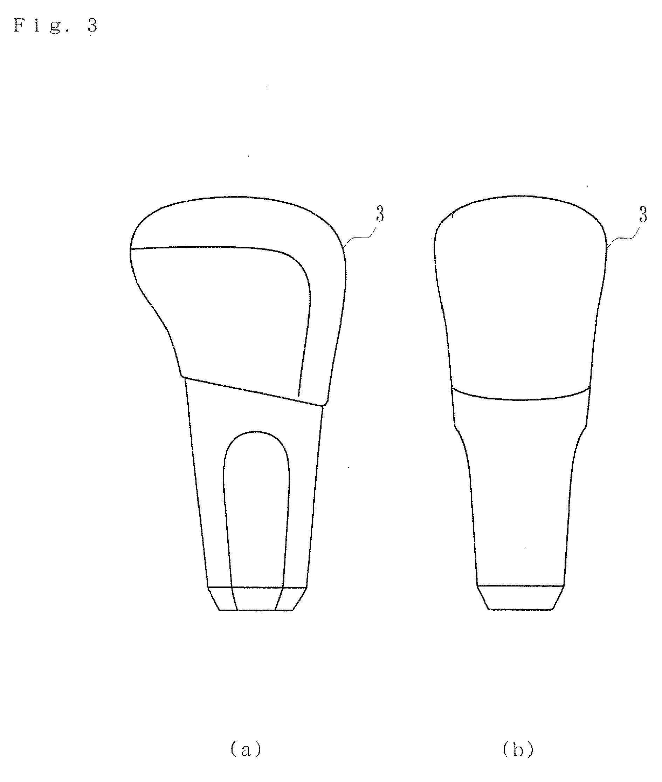

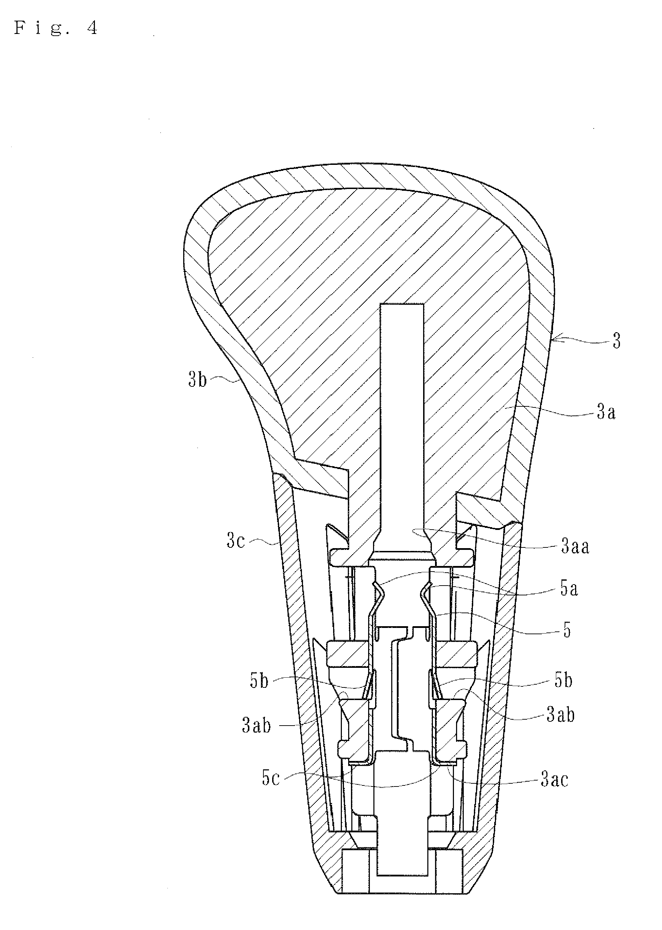

As clearly shown in Figs. 3 and 4, the operating knob 3 is integrally formed by a core member 3a and skins 3b, 3c covering the core member 3a. In addition, the core member 3a is formed with a mounting bore 3aa for receiving the top end of the operating lever shaft 4. The mounting bore 3aa is formed so that it extends from the bottom of the core member 3a. The cross-sectional configuration of the mounting bore 3aa of the operating knob 3 has substantially same cross-sectional configuration as that of the chamfered portions 4b so that relative rotation between the operating lever shaft 4 and the operating knob 3 can be prevented once the knob 3 is mounted on the lever shaft 4.

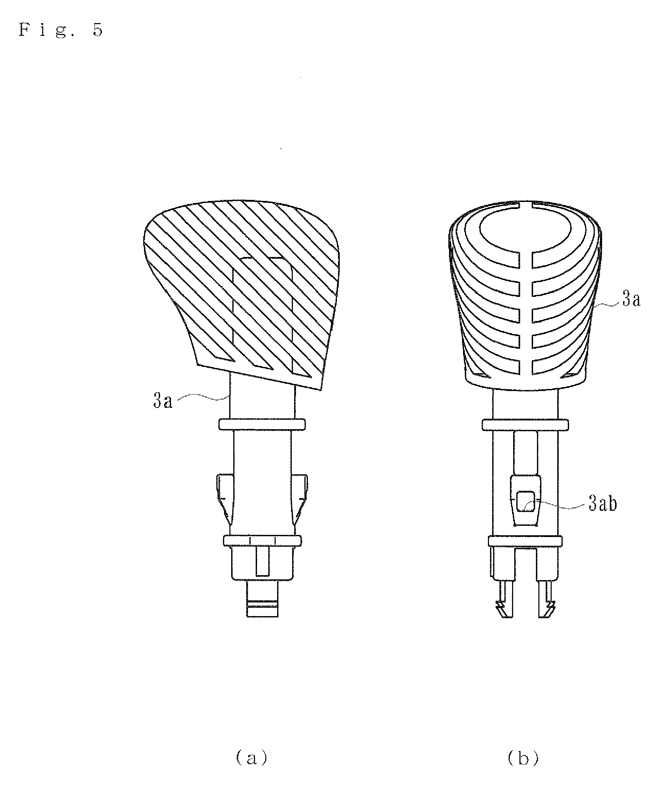

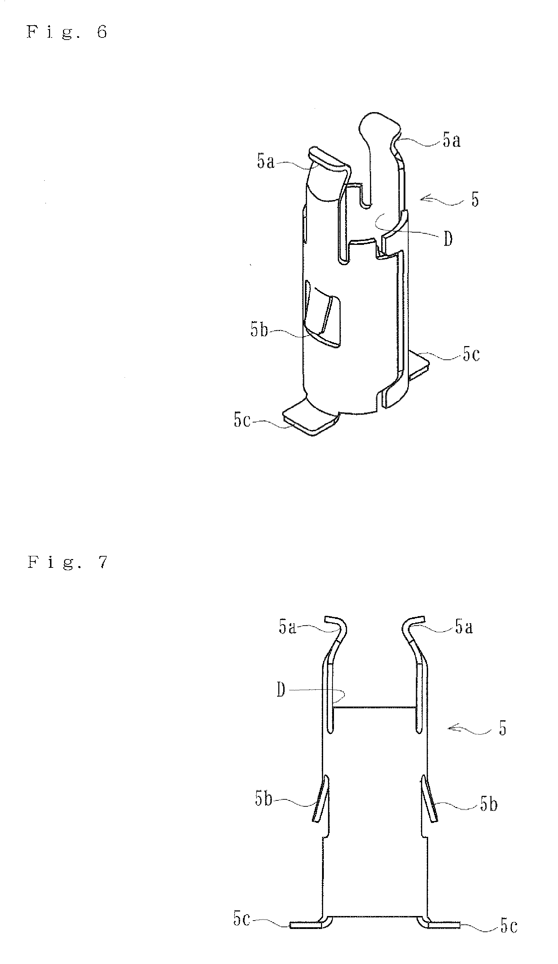

As shown in Fig. 5, the core member 3a of the operating knob 3 is formed with an opening 3ab communicating inside and outside of the core member 3a. The opening 3ab is intended to be engaged by an engagement member 5. The engagement member 5, as shown in Figs. 6 and 7, has a substantially cylindrical configuration having an inner diameter D which is substantially same as (somewhat larger than) an outer diameter of the operating lever shaft 4. That is, the cylindrical configuration of the engagement member 5 is substantially same as the outer diameter of the lever shaft 4 so that the lever shaft 4 can be inserted into the engagement member 5.

The engagement member 5 is formed substantially at its axially central portion with a pair of engagement portions 5b extending laterally and elastically deflectable radially, and the engagement member 5 can be secured on the operating knob 3 within its mounting bore 3aa through engagement of the engagement portions 5b with edges of the openings 3ab of the core member 3a of the operating knob 3. That is, the radially deflectable engagement portions 5b is deformed radially inward during the engagement member 5 is inserted into the mounting bore 3aa of the operating knob 3 from the bottom opening thereof and then the engagement portions 5b are radially sprung back into the openings 3ab and engage the edges thereof when the engagement portions 5b are arrived at the openings 3ab.

In addition the engagement member 5 is formed at its bottom end with a pair of laterally extending securing portions 5c, and the securing portions 5c is adapted to be abutted against the end surface 3ac (Fig. 4) of the core member 3a when the engagement portions 5b are engaged with the edges of the openings 3ab. That is, the engagement member 5 is can be exactly positioned and secured within the mounting bore 3aa of the operating knob 3 (strictly the core member 3a) by the engagement portions 5b and the securing portions 5c.

In this preferred embodiment, the engagement member 5 is formed, at its top end, with a pair of nails 5a elastically deformable in the radial direction. Each of the nails 5a axially extends and has a radially inwardly curved portion near its top end. The nails 5a are bent radially outward when the lever shaft 4 is inserted into the engagement member 5. Thus, after the engagement member 5 is secured within the mounting bore 3aa, insertion of the operating lever shaft 4 into the engagement member 5 enables the lever shaft 4 to be secured within the engagement member 5 (i.e. the mounting bore 3aa of the knob 3) due to snap engagement of the nails 5a of the engagement member 5 into the engagement recess 4a of lever shaft 4.

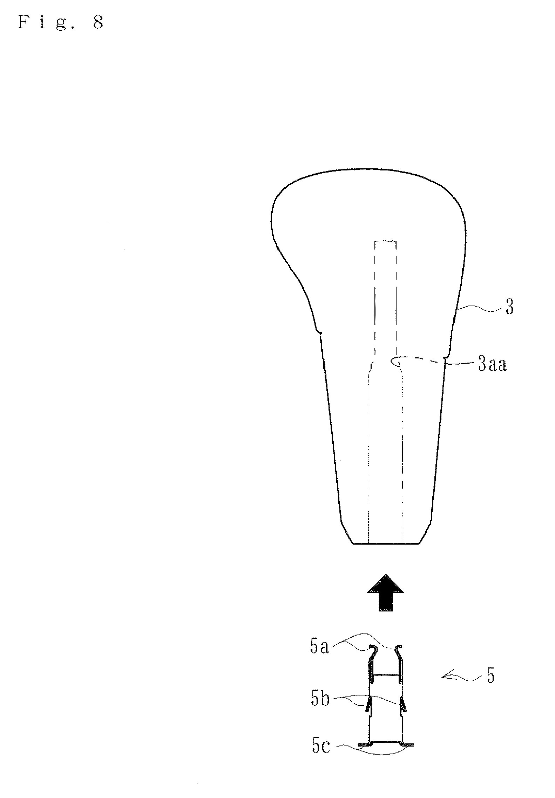

Then the method for mounting the operating knob 3 on the operating lever shaft 4 will be described more in detail.
First of all, as shown in Fig. 8, the engagement member 5 is inserted into the mounting bore 3aa of the operating knob 3 and secured therein. In this condition, the engagement member 5 is exactly positioned and secured in the mounting bore 3aa with the engagement portions 5b engaging the edges of the openings 3ab as well as the securing portions 5b abutting against the bottom surface 3ac of the core member 3a.

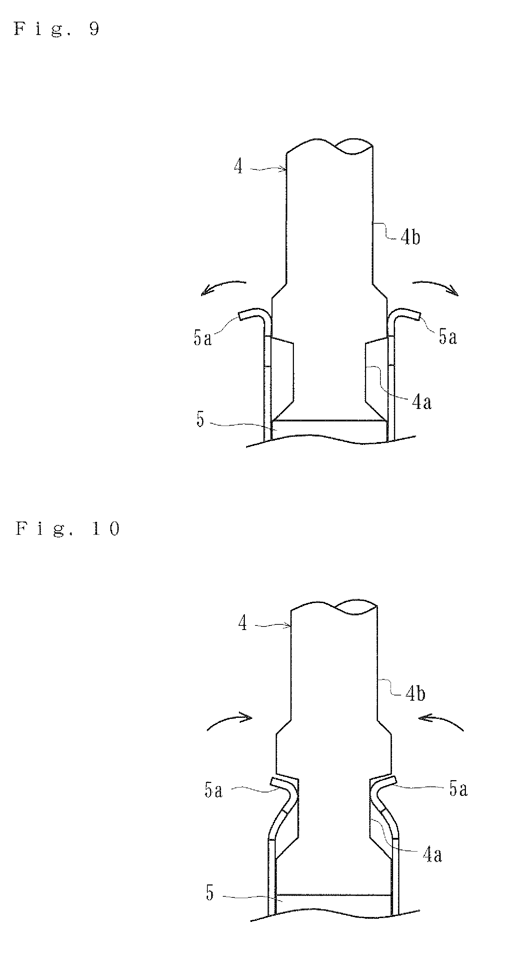

Then the lever shaft 4 is inserted into the mounting bore 3aa of the knob 3. After the top end of the lever shaft 4 has passed through the engagement member 5, the nails 5a are elastically expanded radially outward by the lever shaft 4 as shown in Fig. 9 and allow the lever shaft 4 to further advance. Then the nails 5a are sprung back and snapped into the engagement recesses 4a as shown in Fig. 10.

Simultaneously with this snapping action of the nails 5a, the engagement portions 5b of the engagement member 5 are also elastically expanded radially outward and engage the edges of the openings 3ab as well as the securing portions 5c of the abutment member 5 abut against the bottom face of the core member 3a of the knob 3. Accordingly the operation knob 3 is secured on the lever shaft 4 and prevented from being slipped off from the lever shaft 4. This simple and easy mounting method enables to reduce the number of assembling steps as comparing with the mounting method of the prior art using screws. In addition since substantially large outer circumferential surface of the lever shaft 4 is covered by the inner circumferential surface D of the engagement member 5, it is possible to stably mount the knob 3 on the without generation of rattle.

In addition, since the engagement member 5 has a cylindrical configuration enabling the operating lever shaft 4 to be passed therethrough, it is possible to elastically support the operating knob 3 at any position relative to the lever shaft 4 by changing the securing position of the engagement member 5 within the knob 3. Furthermore since the nails 5a of the engagement member 5 engage the engagement recesses 4a formed on the outer circumferential surface of the lever shaft 4, the operating knob 3 can be elastically supported on the lever shaft 4 more firmly and stably. In addition, since the nails 5a are arranged on the lever shaft 4 in one pair fashion oppositely in the diametrical direction thereof, the knob 3 can be assembled to the lever shaft 4 more stably.

The present invention is not limited to the illustrated and described embodiment and thus many modifications may be incorporated. For example, it may be possible to elastically support the operating knob 3 on the operating lever shaft 4 at a plurality of points by providing three or more nails 5a. In addition although it is illustrated and described that the cross-sectional configuration of the lever shaft 4 is round, other any cross-sectional configuration (e.g. rectangular or ellipse etc.) may be adopted. In these cases, it is necessary to make the cross-sectional configuration of the engagement member 5 substantially same as that of the lever shaft 4.

In addition the engagement member 5 may be secured in the mounting bore 3aa of the core member 3a of the knob 3 using any other form. Although the illustrated embodiment is applied to an automatic speed changing apparatus in the so-called automatic transmission vehicle, it may be applied to the so-called manual transmission vehicle.

### Applicability in industry

If the speed changing operation apparatus for vehicle is a type comprising an engagement member having a cylindrical configuration of substantially same inner circumferential configuration as an outer circumferential configuration of the operating lever shaft, the engagement member being adapted to be received and secured within the mounting bore of the operating knob and having nails being able to be elastically deformed by the operating lever shaft and engaged therewith when the operating lever shaft is inserted through the engagement member, it is possible to apply the speed changing operation apparatus for vehicle of the present invention to that having a different outline configuration or additional functions.

## Claims

1. A speed changing operation apparatus for vehicle comprising an operating lever shaft (4) pivotally supported on a speed changing operation unit (1) and an operating knob (3) formed with a mounting bore (3aa) for receiving a top end of the operating lever shaft (4) and adapted to be mounted on the top end of the operating lever shaft for carrying out a speed changing operation of a transmission of vehicle by pivoting the operating lever shaft (4) **characterized in** further comprising an engagement member (5) having a cylindrical configuration of substantially same inner circumferential configuration as an outer circumferential configuration of the operating lever shaft, the engagement member (5) being adapted to be received and secured within the mounting bore (3aa) of the operating knob (3) and having nails (5a) being able to be elastically deformed by the operating lever shaft (4) and engaged therewith when the operating lever shaft (4) is inserted through the engagement member (5).

2. A speed changing operation apparatus for vehicle of claim 1 wherein said operating lever shaft (4) is formed with engagement recesses (4a) on its outer circumferential surface with which the nails (5a) of the engagement member (5) can engage.

3. A speed changing operation apparatus for vehicle of claim 1 or 2 wherein at least one pair of the nails (5a) are formed on the engagement member (5) so that they are arranged opposite with each other across the diameter of the operating lever shaft (4).

4. A speed changing operation apparatus for vehicle of any one of claims 1~3 wherein the operating knob (3) is integrally formed by a core member (3a) and skins (3b and 3c) covering the core member (3a), and the mounting bore (3aa) is formed on the core member (3a) so that it extends from the bottom of the core member (3a).

5. A speed changing operation apparatus for vehicle of claim 4 wherein the core member (3a) of the operating knob (3) is formed with openings (3ab), and the engagement member (5) can be secured on the operating knob (3) through engagement of the engagement member (5) with the openings (3ab).

6. A speed changing operation apparatus for vehicle of claim 5 wherein the engagement member (5) is formed substantially at its axially central portion with a pair of engagement portions (5b) extending laterally and elastically deflectable radially, and the engagement member (5) can be secured on the operating knob (3) within its mounting bore (3aa) through engagement of the engagement portions (5b) with edges of the openings (3ab) of the core member (3a) of the operating knob (3).

7. A speed changing operation apparatus for vehicle of claim 6 wherein the engagement member (5) is formed at its bottom end with a pair of laterally extending securing portions (5c), and the securing portions (5c) are adapted to be abutted against the end surface of the core member (3a) when the engagement portions (5b) are engaged with the edges of the openings (3ab) .

8. A speed changing operation apparatus for vehicle of any one of claims 1~7 wherein the operating lever shaft (4) is formed with chamfered portions (4b) over a predetermined region from its top end, the cross-sectional configuration of the operating lever shaft (4) at which the chamfered portions (4b) are formed has substantially same cross-sectional configuration of the mounting bore (3aa) of the operating knob (3) so that relative rotation between the operating lever shaft (4) and the operating knob (3) is prevented once the knob (3) is mounted on the lever shaft (4).

9. A speed changing operation apparatus for vehicle of any one of claims 1~8 wherein the operating lever shaft (4) is mounted on the speed changing operation unit (1) so that it can pivot fore and aft as well as right and left directions along gate grooves (2) formed on the speed changing operation unit (1).
